# NEUE EUROPÄISCHE PATENTSCHRIFT

(11) **EP 3 708 522 B2**
(45) Veröffentlichungstag und Bekanntmachung des Hinweises auf die Entscheidung über den Einspruch: **21.08.2024**
(45) Hinweis auf die Patenterteilung: 08.09.2021
(21) Anmeldenummer: 20157821.8
(22) Anmeldetag: 18.02.2020
(51) Int. Cl.: B65G 47/51

(54) **TRANSPORTSYSTEM FÜR WERKSTOFFPLATTEN**
TRANSPORT SYSTEM FOR SHEETS OF MATERIAL
SYSTÈME DE TRANSPORT POUR PLAQUES DE MATÉRIAU

(30) Priorität: 13.03.2019 DE 102019001784
(43) Veröffentlichungstag der Anmeldung: 16.09.2020
(73) Patentinhaber: Siempelkamp Maschinen- und Anlagenbau GmbH, 47803 Krefeld (DE)
(72) Erfinder: Hanßen, Ralf, 41379 Brüggen (DE); Steiner, Lothar, 47669 Wachtendonk (DE); Vaeßen, Michael, 41462 Neuss (DE); Weiner, Christian, 40670 Meerbusch (DE)
(74) Vertreter: Andrejewski - Honke Patent- und Rechtsanwälte Partnerschaft mbB

(56) Entgegenhaltungen:
- DE-A1- 19 963 021
- US-A- 2 981 399
- US-A- 5 421 446

## Beschreibung

Die Erfindung betrifft ein Transportsystem für Werkstoffplatten, über welches eine Werkstoffplatte auf einem von Rollen oder umlaufenden Bändern unterstützten Bewegungspfad entlang einer Bewegungsrichtung von einer ersten Behandlungsstation zu einer zweiten Behandlungsstation transportierbar ist, wobei das Transportsystem wenigstens eine Zu- und/oder Ableiteinrichtung innerhalb des Bewegungspfades für Werkstoffplatten hin zu und/oder weg von dem Bewegungspfad aufweist.

Die Erfindung betrifft außerdem ein Verfahren zum Zu- und/oder Ableiten von Werkstoffplatten in einem Transportsystem für Werkstoffplatten, über welches eine Werkstoffplatte auf einem von Rollen oder umlaufenden Bändern unterstützten Bewegungspfad entlang einer Bewegungsrichtung von einer ersten Behandlungsstation zu einer zweiten Behandlungsstation transportiert werden kann.

Unter Werkstoffplatten werden in erster Linie Holzwerkstoffplatten verstanden, die bereits in einer vorzugsweise kontinuierlichen Presse hergestellt und im Folgenden mit Sägen geschnitten wurden. Hier kommen beispielsweise Span-, MDF- oder OSB-Platten in Frage.

Bei den Behandlungsstationen im Oberbegriff handelt es sich in erster Linie um Schneideinrichtungen und Schleifeinrichtungen. Dabei kann die Bewegungsrichtung von einer Schleifeinrichtung zu einer Endschneideeinrichtung oder aber auch von einer Plattenschneideeinrichtung zu einer Schleifeinrichtung verlaufen.

Der Bewegungspfad für die Werkstoffplatten ist in der Regel ein ebener Rollengang oder von Tragriemen gestützter Verfahrweg für die Werkstoffplatten. Weitere Unterstützungen wie beispielsweise Gaspolster oder Gleitflächen sollen von der Erfindung mit erfasst sein.

Die Zu- und/oder Ableiteinrichtungen waren in der Vergangenheit getrennte Anordnungen, die zu Beginn oder am Ende einer Transportstrecke, also des Bewegungspfades von einer ersten zu einer zweiten Behandlungsstation eingesetzt wurden. Um Innerhalb eines Bewegungspfades Werkstoffplatten, die beispielsweise einer niedrigere Qualität aufwiesen, auszuschleusen, waren aufwändige Weichenanordnungen notwendig. So wurden beispielsweise Führungsrollen oder auch Förderbänder oder -riemen in der Höhe versetzt, um Platten auf unterschiedlichen angrenzenden Pfaden weiterzuleiten.

Ein Transportsystem nach dem Oberbegriff des Anspruchs 1 und ein Verfahren nach dem Oberbegriff des Anspruchs 7 sind zum Beispiel aus US 2,981,399 bekannt.

Die Erfindung setzt sich zur Aufgabe, den Bauraum des Transportsystems trotz wenigstens einer Zu- oder Ableiteinrichtung für Holzwerkstoffplatten gering zu gestalten.

Die Aufgabe wird anordnungsmäßig durch die Merkmale des ersten Anspruchs und insbesondere dadurch gelöst, dass ein Abschnitt des von Rollen oder umlaufenden Bändern unterstützten Bewegungspfades in eine andere als die Bewegungsrichtung entfernbar ist und das Transportsystem eine unterhalb des Abschnitts angeordnete Hubanordnung aufweist, die geeignet ist, Werkstoffplatten dem Bewegungspfad zuzuführen und aus diesem aufzunehmen.

Die Grundidee besteht einfach darin, einen Teil des Bewegungspfades, also ein Teilstück der Tragrollen- oder -bänder seitlich zu verfahren und somit in raumsparender Weise, Platten von unten mit der Hubanordnung hochzufahren und einzuschleusen oder aber aussortierte Platten auf der Hubanordnung aufzunehmen und nach unten aus dem Bewegungspfad wegzubringen. Dazu muss der Abschnitt verständlicherweise zumindest der Länge einer Werkstoffplatte in Bewegungsrichtung aufweisen. Dennoch ist der Aufwand deutlich geringer und platzsparender als mit den komplizierten Weichenanordnungen der Vergangenheit.

Es ist demnach vorgesehen, dass die Hubanordnung geeignet ist, Werkstoffplatten dem Bewegungspfad zuzuführen und aus diesem aufzunehmen.

Die Hubanordnung besitzt dazu eine Auflagefläche für wenigstens eine Werkstoffplatte. Der Hub ist so groß ausgelegt, dass er von einer Aufnahmeposition bzw. Abgabeposition im tiefsten Punkt bis annähernd zum Bewegungspfad reicht. In der Aufnahmeposition bzw. Abgabeposition kann bequem wenigstens eine Werkstoffplatte, beispielsweise mit einem Transportfahrzeug eingebracht oder weggebracht werden.

Es ist vorteilhaft, wenn die Hubvorrichtung geeignet ist, einen Stapel von Werkstoffplatten aufzunehmen.

In diesem Fall ist es möglich, ohne platzraubende Zuleitungswege gleich mehrere Werkstoffplatten hintereinander von der Hubvorrichtung aufzunehmen und diese dann als Stapel wegbringen zu lassen. Oder umgekehrt können mehrere Werkstoffplatten nacheinander in den Bewegungspfad eingeschleust werden. Dazu muss die Hubvorrichtung nur geeignet sein, Hubbewegungen in der Größe der Werkstoffplattendicke auszuführen.

Mit Vorteil ist verbunden, wenn das Transportsystem Antriebselemente aufweist, die geeignet sind, die Werkstoffplatten von dem Bewegungspfad auf die Hubanordnung oder von der Hubanordnung auf den Bewegungspfad zu verschieben.

Mit diesen Antriebselementen kann der Ein- bzw. Ausleitvorgang automatisiert werden.

Vorzugsweise weist das Transportsystem Leitelemente und Zentrierelemente auf.

Derartige Leit- und Zentrierelemente können an den verschiedensten Stellen im Transportsystem Anwendung finden. So müssen die Werkstoffplatten in Bewegungsrichtung zentriert und gerade auf dem Bewegungspfad ausgerichtet sein und eine Ablage auf der Hubanordnung kantengenau erfolgt.

Es ist vorgesehen, dass das Transportsystem eine Zuleiteinrichtung und eine Ableiteinrichtung aufweist, von denen wahlweise eine einsetzbar ist.

Diese Anordnung bietet den Vorteil, dass man neben dem normalen Durchschleusen auf dem Bewegungspfad von der ersten zur zweiten Behandlungsstation eine der beiden Möglichkeiten, nämlich das Ein- oder das Ausschleusen von Werkstoffplatten in den Strom schalten kann.

Dabei ist bevorzugt, dass die Zuleiteinrichtung und die Ableiteinrichtung gemeinsam verfahrbar sind.

Es gibt also quasi eine Wechselschaltung zwischen den beiden Optionen des Ein- oder Ausschleusens. Es sind dann nur die jeweils notwendigen Leit-, Führungs- und Antriebselemente oberhalb des von Rollen oder umlaufenden Bändern unterstützten Bewegungspfadabschnitts aktiv, die gerade benötigt werden.

Dass die Ableiteinrichtung den entfernten Abschnitt des von Rollen oder umlaufenden Bändern unterstützten Bewegungspfades umfasst.

Dabei wird dem von Rollen oder umlaufenden Bändern unterstützten Bewegungspfad, der zum Ausschleusen entfernt wurde, die zweite Funktion einer Leiteinrichtung zugeordnet.

Bevorzugt ist in Laufrichtung zwischen der ersten Behandlungsstation und dem Abschnitt des von Rollen oder umlaufenden Bändern unterstützten Bewegungspfades ein Qualitätserfassungssensor für die Werkstoffplatte angeordnet.

Es kann also die Qualität der Werkstoffplatte detektiert werden, bevor sie zur Ableiteinrichtung gelangt. Wird die Werkstoffplatte beispielsweise anhand des optischen Bildes Ihrer Oberfläche oder ihrer Abmessungen als B-Ware eingestuft, kann die Ableiteinrichtung über eine zentrale Steuerung aktiviert werden.

Die Aufgabe wird schließlich verfahrensmäßig durch die Merkmale des Anspruchs 7 und insbesondere dadurch gelöst, dass ein Abschnitt des von Rollen oder umlaufenden Bändern unterstützten Bewegungspfades in eine andere als die Bewegungsrichtung entfernt wird und eine unterhalb des Abschnitts angeordnete Hubanordnung Werkstoffplatten in den Bewegungspfad einschleust und aus diesem aufnimmt.

Die grundlegende Idee ist bereits bei der Beschreibung der Vorrichtungsansprüche erfolgt. Verfahrensmäßig kann auf diese Weise der Transportprozess für die Werkstoffplatten mit der Qualitätssortierung kombiniert werden. Da die Zuführung als Hubanordnung nur den Platz unterhalb des Bewegungspfades benötigt, erfolgt der Prozess in äußerst platzsparender Weise.

Dabei ist es vorteilhaft, wenn Werkstoffplatten mittels mit dem Transportsystem verbundener Antriebe und Leiteinrichtungen auf den Bewegungspfad gebracht und/oder von dem Bewegungspfad auf die Hubanordnung gelenkt werden.

Ebenso ist es zeit- und platzsparend, wenn die Hubvorrichtung einen Stapel aus Werkstoffplatten aufnimmt und dabei Arbeitshubschritte von Werkstoffplattendicke vornimmt.

Im Folgenden wird die Erfindung anhand eines Ausführungsbeispiels darstellender Zeichnungen näher erläutert. Es zeigen
- Fig. 1: ein erfindungsgemäßes System zum Transport von Werkstoffplatten mit einer Ein- und Ausleiteinrichtung in Durchlaufposition,
- Fig. 2: ein erfindungsgemäßes System zum Transport von Werkstoffplatten mit einer Ein- und Ausleiteinrichtung in Zuführposition.
- Fig. 3: ein erfindungsgemäßes System zum Transport von Werkstoffplatten mit einer Ein- und Ausleiteinrichtung in Ausleitposition
- Fig. 4: Ein schematische Detailzeichnung des Ausleitmittels.

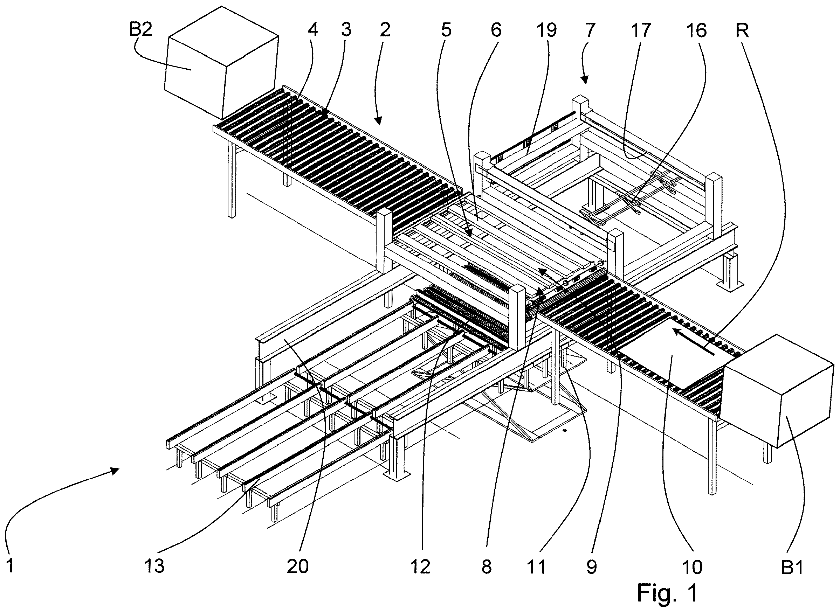

Fig.1 zeigt das erfindungsgemäße Transportsystem 1 in seiner Durchlaufstellung in Bewegungsrichtung R. Von den zu transportierenden Werkstoffplatten 10 ist aus Gründen der Übersichtlichkeit nur eine dargestellt und auch nur in Fig. 1. Die Werkstoffplatten 10 werden von einer ersten Behandlungsstation B1, beispielsweise einer Schleifstation, zu einer zweiten Behandlungsstation B2, beispielsweise einer Sägeanlage, auf einem Bewegungspfad 2 verbracht. Die Behandlungsstationen B1, B2 sind hier nur schematisch als Kasten dargestellt.

Der Bewegungspfad 2 kann beispielsweise durch angetriebene Rollen 3 oder umlaufende Tragbänder 6 unterstützt sein. In diesem Ausführungsbeispiel ist auch aus Gründen der späteren Übersichtlichkeit das erste Teilstück von der Behandlungsstation B1 bis zu einem bestimmten Abschnitt 9 des Bewegungspfades 2 durch einen rollenunterstützten Bewegungspfad 3 realisiert, genauso wie das Teilstück von dem bestimmten Abschnitt 9 bis zur zweiten Behandlungsstation B2. Der Abschnitt 9 ist im Ausführungsbeispiel durch einen bandunterstützten Bewegungsabschnitt 5 gebildet.

Hinsichtlich des Bewegungspfades wird hier der gesamte Bewegungspfad von der ersten Behandlungsstation B1 zur zweiten Behandlungsstation B2 mit dem Bezugszeichen 2 definiert. Beispielhaft sind rollenunterstützte Bewegungspfade mit dem Bezugszeichen 3 versehen und bandunterstützte Bewegungspfade mit dem Bezugszeichen 5. Der erfindungswesentliche Abschnitt 9 bekommt wegen seiner Bedeutung ein zusätzliches Bezugszeichen und kann sowohl bandunterstützt als auch rollenunterstützt sein. Die bewegungspfade 3 und 5 sind Teilstücke des Gesamten Bewegungspfades 2.

Es sind selbstverständlich auch andere Bewegungspfade im Rahmen der Erfindung möglich. Die beispielhaft dargestellten Rollen 4 bzw. Bänder 6 sind angetrieben, um einen einfachen Transport der Werkstoffplatten 10 zu ermöglichen.

Das Transportsystem 1 umfasst ferner eine Hubanordnung 11 unterhalb des Abschnitts 9 des Bewegungspfades 2. Über eine Rampe, in diesem Ausführungsbeispiel in Form einer kettenunterstützten Zu- bzw. Abfuhr 13 können Werkstoffplatten Auflagefläche 12 der Hubanordnung 11 zugeführt oder von ihr entnommen werden, sogar als Plattenstapel.

Weiterhin ist ein Umschaltrahmen 19 vorgesehen, der auf Schienen 20 verfahren werden kann. Er hat zwei alternative Endpositionen. In der ersten fungiert er als Ableiteinrichtung 8, in der anderen als Zuleiteinrichtung 7 für Werkstoffplatten. Man kann auch sagen, dass die eine Hälfte des Umschaltrahmens 19 (in der Fig. 1 bis 3 vorne) die Ausleiteinrichtung 8 und die andere Hälfte des Umschaltrahmens 19 (in der Fig. 1 bis 3 hinten) die Zuleiteinrichtung 7 trägt. Diese beiden einnehmbaren Positionen werden in den folgenden Figuren näher erläutert.

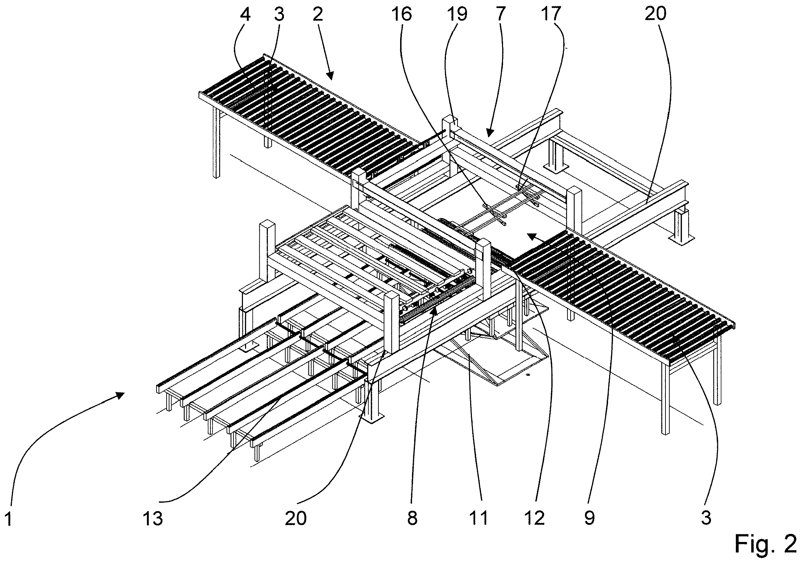

Fig. 2 zeigt das Transportsystem 1 mit aktivierter Zuleiteinrichtung 7. Dazu wurde der Umschaltrahmen (in der Zeichnung nach vorne) verfahren. Die Transportbänder 6 sind dadurch aus dem Bereich des Abschnitts 9 des Bewegungspfades 2 seitlich entfernt worden. Es ergibt sich eine Öffnung im Abschnitt 9 direkt oberhalb der Hubanordnung 11. Der Hubanordnung 11 zugeführte Werkstoffplatten, ggf. schrittweise auch Stapel davon, werden angehoben, bis die oberste Werkstoffplatte knapp oberhalb des Bewegungspfades angekommen ist. In Schienen 17 verfahrbare Klauen 16 greifen an einer Stirnseite einer Werkstoffplatte an und ziehen die oberste Werkstoffplatte auf den rollenunterstützten Bewegungspfad 3 zwischen dem Abschnitt 9 und der zweiten Behandlungsstation B2. Sollte sich ein Plattenstapel auf der Auflagefläche 12 der Hubanordnung 11 befinden, so kann die Hubanordnung sukzessive um die Werkstoffplattendicke nach oben bewegt werden und die Platten nacheinander auf den Bewegungspfad gebracht werden. Eine solche Zuführung von Werkstoffplatten ergibt sich häufig dann, wenn Platten in einem Lager, beispielsweise zum Zweck der Trocknung oder Abkühlung abgelegt wurden, bevor sie zur zweiten Behandlungsstation verbracht werden konnten.

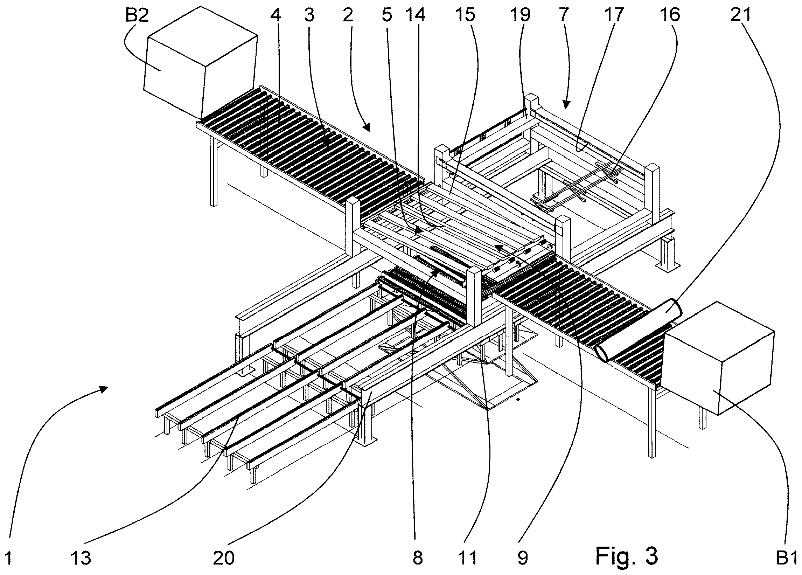

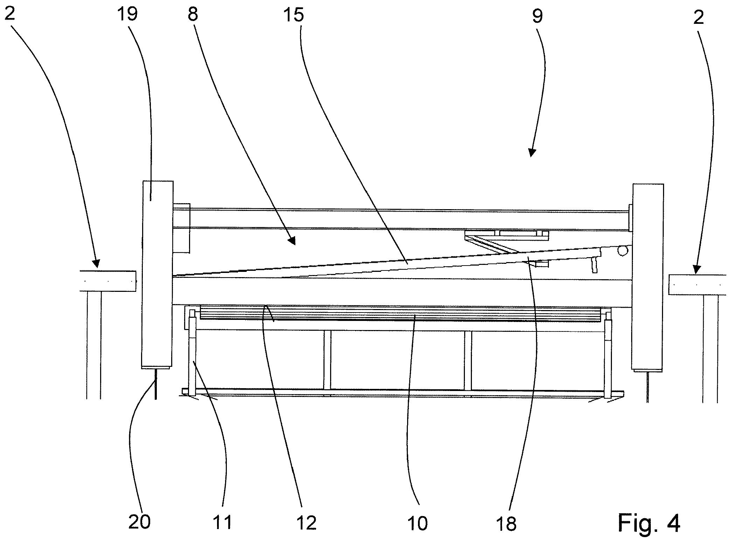

Den gegenteiligen Prozess und damit die Aktivierung der Ableiteinrichtung 8 zeigt Fig. 3. Der Umschaltrahmen 19 ist wieder in seine Ausgangsposition zurückbewegt worden. Einlaufseitig werden die umlaufenden Bänder 6 über eine nicht dargestellte Mechanik angehoben, so dass Werkstoffplatten 10, von der ersten Behandlungsstation B1 kommend, quasi unter den bandunterstützten Bewegungspfad 5 im Bereich des Abschnitts 9 bewegt werden. Die umlaufenden Bänder 6 übernehmen dabei die Aufgabe eines Bandantriebs 15 bzw. einer Leit- und Zentriereinrichtung 18 oberhalb der auszuschleusenden Werkstoffplatte 10 (nicht dargestellt). Dies ist eventuell deutlicher in der Detailansicht Fig. 4 zu erkennen. Mit dieser Ausleiteinrichtung wird die Werkstoffplatte also auf den sich bildenden Plattenstapel auf der Auflagefläche 12 der Hubanordnung 11 geleitet und als oberste Werkstoffplatte abgelegt. Dabei fährt die Hubanordnung für jede neue Platte um die Plattendicke nach unten.

Ein solcher Ausschleusungsvorgang ist dann sinnvoll, wenn die Platte nicht den gewünschten Qualitätsanforderungen entspricht. Der Ausleitvorgang kann dabei automatisiert werden, wenn zwischen der ersten Behandlungsstation B1 und dem Abschnitt 9 des Bewegungspfades 2 ein Qualitätserfassungssensor 21 angeordnet ist, dessen Messsignal an Ableiteinrichtung 8 weitergegeben werden kann. Wenn der Qualitätserfassungssensor 21 erkennt, dass die Platte beispielsweise beschädigt ist, kann der bandunterstützte Bewegungspfad 5 einlaufseitig hochgefahren werden, so dass die Ausschussplatte von dem Bahnlaufpfad 2 auf die Hubanordnung 11 umgelenkt wird.

Sowohl für die Zuleiteinrichtung 7 als auch für Ableiteinrichtung 8 muss der rollen- oder bandunterstützte Abschnitt 9 des Bahnlaufpfades in eine andere als die Bewegungsrichtung entfernt werden, um den entsprechenden Vorgang möglich zu machen.

**Bezugszeichenliste**

| | |
|---|---|
| 1 | Transportsystem |
| 2 | Gesamter Bewegungspfad |
| 3 | Rollenunterstützter Bewegungspfad |
| 4 | (Angetriebene) Rolle |
| 5 | Bandunterstützter Bewegungspfad |
| 6 | Umlaufendes Band |
| 7 | Zuleiteinrichtung |
| 8 | Ableiteinrichtung |
| 9 | Abschnitt des Bewegungspfades |
| 10 | Werkstoffplatte |
| 11 | Hubanordnung, Schertisch |
| 12 | Auflagefläche der Hubanordnung |
| 13 | Kettenunterstützte Zu- bzw. Abfuhr zur Hubanordnung |
| 14 | Antriebselement |
| 15 | Bandantrieb |
| 16 | Verfahrbare Kralle |
| 17 | Schiene für Kralle |
| 18 | Leit- und Zentrierelement |
| 19 | Umschaltrahmen |
| 20 | Schiene für Umschaltrahmen |
| 21 | Qualitätserfassungssensor |
| B1, B2 | Behandlungsstation |
| R | Bewegungsrichtung |

## Patentansprüche

1. Transportsystem für Werkstoffplatten, über welches eine Werkstoffplatte (10) auf einem von Rollen (4) oder umlaufenden Bändern (6) unterstützten Bewegungspfad (2, 3, 5) entlang einer Bewegungsrichtung (R) von einer ersten Behandlungsstation (B1) zu einer zweiten Behandlungsstation (B2) transportierbar ist, wobei das Transportsystem (1) wenigstens eine Zu- und/oder Ableiteinrichtung (7, 8) innerhalb des Bewegungspfades (2, 3, 5) für Werkstoffplatten hin zu und/oder weg von dem Bewegungspfad (2, 3, 5) aufweist, **dadurch gekennzeichnet,**
**dass** das Transportsystem eine Zuleiteinrichtung (7) und eine Ableiteinrichtung (8) aufweist, von denen wahlweise eine einsetzbar ist,
**dass** ein Abschnitt (9) des von Rollen (4) oder umlaufenden Bändern (6) unterstützten Bewegungspfades (2, 3, 5) in eine andere als die Bewegungsrichtung (R) entfernbar ist und das Transportsystem eine unterhalb des Abschnitts (9) angeordnete Hubanordnung (11) aufweist, die geeignet ist, Werkstoffplatten (10) dem Bewegungspfad (2, 3, 5) zuzuführen und aus diesem aufzunehmen.

2. Transportsystem gemäß Anspruch 1 , **dadurch gekennzeichnet, dass** die Hubvorrichtung (11) geeignet ist, einen Stapel von Werkstoffplatten (10) aufzunehmen.

3. Transportsystem gemäß einem der Ansprüche 1 oder 2, **dadurch gekennzeichnet, dass** das Transportsystem Leitelemente und Zentrierelemente (18) aufweist.

4. Transportsystem gemäß einem der Ansprüche 1 bis 3, **dadurch gekennzeichnet, dass** die Zuleiteinrichtung (7) und die Ableiteinrichtung (8) gemeinsam verfahrbar sind.

5. Transportsystem gemäß einem der Ansprüche 1 bis 5, **dadurch gekennzeichnet, dass** die Ableiteinrichtung (8) den entfernten Abschnitt (9) des von Rollen oder umlaufenden Bändern unterstützten Bewegungspfades (2, 3, 5) umfasst.

6. Transportsystem gemäß einem der Ansprüche 1 bis 5, **dadurch gekennzeichnet, dass** in Bewegungsrichtung (R) zwischen der ersten Behandlungsstation (B1) und dem Abschnitt (9) des von Rollen oder umlaufenden Bändern unterstützten Bewegungspfades (2, 3, 5) ein Qualitätserfassungssensor (21) für eine Werkstoffplatte (10) angeordnet ist.

7. Verfahren zum Zu- und/oder Ableiten von Werkstoffplatten in einem Transportsystem für Werkstoffplatten nach einem der Ansprüche 1 bis 6, über welches eine Werkstoffplatte (10) auf einem von Rollen (4) oder umlaufenden Bändern (6) unterstützten Bewegungspfad (2, 3, 5) entlang einer Bewegungsrichtung (R) von einer ersten Behandlungsstation (B1) zu einer zweiten Behandlungsstation (B2) transportiert werden kann, **dadurch gekennzeichnet, dass** ein Abschnitt (9) des von Rollen (4) oder umlaufenden Bändern (6) unterstützten Bewegungspfades (2, 3, 5) in eine andere als die Bewegungsrichtung (R) entfernt wird und eine unterhalb des Abschnitts (9) angeordnete Hubanordnung (11) Werkstoffplatten (10) in den Bewegungspfad (2, 3, 5) einschleust und aus diesem aufnimmt.

8. Verfahren gemäß Anspruch 7, **dadurch gekennzeichnet, dass** Werkstoffplatten mittels mit dem Transportsystem verbundener Antriebe (14, 15) und Leiteinrichtungen (18) auf den Bewegungspfad (2, 3, 5) gebracht und/oder von dem Bewegungspfad (2, 3, 5) auf die Hubanordnung gelenkt werden.

9. Verfahren gemäß Anspruch 7 oder 8, **dadurch gekennzeichnet, dass** die Hubvorrichtung (11) einen Stapel aus Werkstoffplatten (10) aufnimmt.

10. Verfahren gemäß einem der Ansprüche 7 bis 9, **dadurch gekennzeichnet, dass** die Hubvorrichtung (11) Arbeitshubschritte von Werkstoffplattendicke vornimmt.

## Claims

1. A transporting system for material boards, by means of which a material board (10) can be transported on a movement path (2, 3, 5) supported by rollers (4) or circulating belts (6) in a direction of movement (R) from a first processing station (B1) to a second processing station (B2), wherein the transporting system (1) comprises at least one feed-in and/or lead-off device (7, 8) within the movement path (2, 3, 5) for moving material boards to and/or away from the movement path (2, 3, 5), **characterised in**
**that** the transporting system comprises a feed-in device (7) and a lead-off device (8), of which either one can be optionally deployed,
**that** a section (9) of the movement path (2, 3, 5) supported by rollers (4) or circulating belts (6) is removable in a direction other than the direction of movement (R) and, arranged under the section (9), the transporting system has a lifting system (11) which is suitable for supplying material boards (10) to the movement path (2, 3, 5) and picking them up from it.

2. The transporting system according to claim 1, **characterised in that** the lifting system (11) is suitable for picking up a stack of material boards (10).

3. The transporting system according to any one of claims 1 or 2, **characterised in that** the transporting system comprises guiding elements and centring elements (18).

4. The transporting system according to any one of claims 1 to 3, **characterised in that** the feed-in device (7) and the lead-off device (8) are jointly moveable.

5. The transporting system according to any one of claims 1 to 4, **characterised in that** the lead-off device (8) includes the remote section (9) of the movement path (2, 3, 5) supported by rollers or circulating belts.

6. The transporting system according to any one of claims 1 to 5, **characterised in that** in the direction of movement (R), a quality recording sensor (21) for a material board (10) is arranged between the first processing station (B1) and the section (9) of the movement path (2, 3, 5) supported by rollers or circulating belts.

7. A method of feeding in and/or leading off material boards in a transporting system for material boards according to any one of claims 1 to 6, by means of which a material board (10) can be transported on a movement path (2, 3, 5) supported by rollers (4) or circulating belts (6) along a direction of movement (R) from a first processing station (B1) to a second processing station (B2), **characterised in that** a section (9) of the movement path (2, 3, 5) supported by rollers (4) or circulating belts (6) is removed in a direction other than the direction of movement (R) and lifting system (11) arranged under the section (9) feeds and material boards (10) into the movement path (2, 3, 5) and deflects them from it.

8. The method according to claim 7, **characterised in that** by means of drives (14, 15) and guiding device (18) connected to the transporting system, material boards are fed onto the movement path (2, 3, 5) and/or steered from the movement path (2, 3, 5) onto the lifting system.

9. The method according to claim 8, **characterised in that** the lifting system (11) picks up a stack of material boards (10).

10. The method according to any one of claims 7 to 9, **characterised in that** the lifting system (11) operates with lifting steps that are the thickness of the material board.

## Revendications

1. Système de transport pour plaques de matériau par le biais duquel une plaque de matériau (10) peut être transportée d'un premier poste de traitement (B1) à un deuxième poste de traitement (B2) le long d'un sens de déplacement (R) sur une trajectoire de déplacement (2, 3, 5) soutenue par des rouleaux (4) ou des bandes en révolution (6), sachant que le système de transport (1) comporte au moins un système d'acheminement et/ou de dérivation (7, 8) à l'intérieur de la trajectoire de déplacement (2, 3, 5) pour plaques de matériau vers et/ou partant de la trajectoire de déplacement (2, 3, 5), **caractérisé en ce**
**que** le système de transport comporte un système d'acheminement (7) et un système de dérivation (8), dont l'un peut être mis en œuvre de façon sélective,
**qu'**une section (9) de la trajectoire de déplacement (2, 3, 5) soutenue par des rouleaux (4) ou des bandes en révolution (6) peut être éloignée dans une autre direction que la direction de déplacement (R) et le système de transport comporte un système de levage (11) disposé en dessous de la section (9), qui est adapté pour acheminer les plaques de matériau (10) à la trajectoire de déplacement (2, 3, 5) et les recevoir de celle-ci.

2. Système de transport selon la revendication 1, **caractérisé en ce que** le système de levage (11) est adapté pour recevoir une pile de plaques de matériau (10) .

3. Système de transport selon l'une quelconque des revendication 1 ou 2, **caractérisé en ce que** le système de transport comporte des éléments directeurs et des éléments de centrage (18).

4. Système de transport selon l'une quelconque des revendications 1 à 3, **caractérisé en ce que** le système d'acheminement (7) et le système de dérivation (8) peuvent être déplacés en commun.

5. Système de transport selon l'une quelconque des revendications 1 à 4, **caractérisé en ce que** le système de dérivation (8) comprend la section éloignée (9) de la trajectoire de déplacement (2, 3, 5) soutenue par des rouleaux ou des bandes en révolution.

6. Système de transport selon l'une quelconque des revendications 1 à 5, **caractérisé en ce qu'**un capteur de saisie de qualité (21) pour une plaque de matériau (10) est disposé dans la direction de déplacement (R) entre le premier poste de traitement (B1) et la section (9) de la trajectoire de déplacement (2, 3, 5) soutenue par des rouleaux ou des bandes en révolution.

7. Procédé destiné à l'acheminement et/ou à la dérivation de plaques de matériau dans un système de transport pour plaques de matériaux selon l'une quelconque des revendications 1 à 6, par le biais duquel une plaque de matériau (10) peut être transportée d'un premier poste de traitement (B1) à un deuxième poste de traitement (B2) le long d'un sens de déplacement (R) sur une trajectoire de déplacement (2, 3, 5) soutenue par des rouleaux (4) ou des bandes en révolution (6), **caractérisé en ce qu'**une section (9) de la trajectoire de déplacement (2, 3, 5) soutenue par des rouleaux (4) ou des bandes en révolution (6) est éloignée dans une direction autre que la direction de déplacement (R) et un système de levage (11) disposé en dessous de la section (9) incorpore les plaques de matériau (10) dans la trajectoire de déplacement (2, 3, 5) et les reçoit de celle-ci.

8. Procédé selon la revendication 7, **caractérisé en ce que** des plaques de matériau sont placées sur la trajectoire de déplacement (2, 3, 5) au moyen de systèmes d'entraînement (14, 15) et systèmes directeurs (18) reliés au système de transport et/ou sont dirigées par la trajectoire de déplacement (2, 3, 5) sur le système de levage.

9. Procédé selon la revendication 7 ou 8, **caractérisé en ce que** le dispositif de levage (11) reçoit une pile de plaques de matériau (10).

10. Procédé selon l'une quelconque des revendications 7 à 9, **caractérisé en ce que** le dispositif de levage (11) procède à des étapes de levage de travail d'épaisseur de plaques de matériau.
